# EUROPEAN PATENT APPLICATION

(11) **EP 4 746 137 A1**
(43) Date of publication of application: **20.05.2026**
(21) Application number: 24842141.4
(22) Date of filing: 19.06.2024
(51) Int. Cl.: H01M 50/103, H01M 50/169, H01M 50/15

(54) **BATTERY CELL CASING, ELECTROCHEMICAL APPARATUS AND PREPARATION METHOD THEREFOR, AND ELECTRICAL DEVICE**

(30) Priority: 14.07.2023 CN 202310870108
(71) Applicant: Ningde Amperex Technology Limited, Ningde, Fujian 352100 (CN)
(72) Inventor: YANG, Jianhui, Ningde, Fujian 352100 (CN); MA, Wu, Ningde, Fujian 352100 (CN)
(74) Representative: Kraus & Lederer PartGmbB
(86) International application number: PCT/CN2024/100231
(87) International publication number: WO 2025/016142

(57) **Abstract**

A battery cell casing (100), an electrochemical apparatus and a preparation method thereof, and an electric apparatus are provided. The battery cell casing (100) includes a bottom wall (110), a side wall (120), and a flange portion (130), where the side wall (120) and the bottom wall (110) together enclose an accommodating space (101) having an opening (102), the flange portion (130) is provided at an end of the side wall (120) away from the bottom wall (110), at least a portion of the flange portion (130) protrudes from an inner surface and/or an outer surface of the side wall (120), a flange surface (131) of the flange portion (130) is substantially perpendicular to the side wall (120) and configured to connect to a battery cell casing cover (200); a transition surface (132) of the flange portion (130) curvedly connects the flange surface (131) and the inner surface and/or the outer surface of the side wall (120), a width of the transition surface (132) in a thickness direction of the side wall (120) is W1, and a wall thickness of the side wall (120) is T1, meeting 0 < W1 ≤ T1, making a width of the flange surface (131) larger, while a width of a portion of the flange portion (130) protruding from the side wall (120) smaller, and enabling the wall thickness of the side wall (120) to be smaller, thereby increasing a volume of the accommodating space (101) and increasing an energy density of the electrochemical apparatus.

## Description

### CROSS-REFERENCE TO RELATED APPLICATIONS

The present application claims priority to Chinese Patent Application CN202310870108.5, filed on July 14, 2023, entitled "BATTERY CELL CASING, ELECTROCHEMICAL APPARATUS AND PREPARATION METHOD THEREOF, AND ELECTRIC APPARATUS", which is incorporated herein by reference in its entirety.

### TECHNICAL FIELD

The present application relates to the field of battery technologies, and specifically, to a battery cell casing, an electrochemical apparatus and a preparation method thereof, and an electric apparatus.

### BACKGROUND

With the rapid development of electronic information technology, various electronic devices are also developing towards intelligence and multi-functionality, and the requirements for the energy density of batteries are also increasingly high. Therefore, how to increase the energy density of batteries has become an urgent problem to be solved in the field of batteries.

### SUMMARY

The present application provides a battery cell casing, an electrochemical apparatus and a preparation method thereof, and an electric apparatus, which can effectively increase the energy density of the electrochemical apparatus.

According to a first aspect, the present application provides a battery cell casing, including a bottom wall, a side wall, and a flange portion, where the side wall is provided around the bottom wall, the side wall and the bottom wall together enclose an accommodating space having an opening, the flange portion is provided at an end of the side wall away from the bottom wall, and at least a portion of the flange portion protrudes from an inner surface and/or an outer surface of the side wall; and
the flange portion has a flange surface and a transition surface, where the flange surface is substantially perpendicular to the side wall and configured to connect to a battery cell casing cover, the transition surface curvedly connects the flange surface and the inner surface and/or the outer surface of the side wall, a width of the transition surface in a thickness direction of the side wall is W1, and a wall thickness of the side wall is T1, meeting 0 < W1 ≤ T1.

In the above technical solution, the battery cell casing includes a bottom wall, a side wall, and a flange portion, where the side wall is provided around the bottom wall, and the side wall and the bottom wall together enclose an accommodating space having an opening, so that an electrode assembly can be accommodated in the accommodating space through the opening; the flange portion is provided at an end of the side wall away from the bottom wall, and at least a portion of the flange portion protrudes from the inner surface and/or the outer surface of the side wall, so that the flange portion can be configured to connect to a battery cell casing cover, so as to increase a connection area with the battery cell casing cover; the flange portion has a flange surface and a transition surface, where the flange surface is substantially perpendicular to the side wall and configured to connect to the battery cell casing cover; the transition surface curvedly connects the flange surface and the inner surface and/or the outer surface of the side wall, a width of the transition surface in a thickness direction of the side wall is W1, and a wall thickness of the side wall is T1, meeting 0 < W1 ≤ T1, so that a width of the flange surface is relatively large, while a width of a portion of the flange portion protruding from the side wall is relatively small. This can make an occupied space of the battery cell casing relatively small, thereby increasing a volume of the accommodating space and increasing an energy density of the electrochemical apparatus, and can make the wall thickness of the side wall relatively small, thereby further increasing the volume of the accommodating space and increasing the energy density of the electrochemical apparatus. If W1 is relatively large (for example, greater than T1), it may cause the width of the flange surface to be relatively small or the width of the portion of the flange portion protruding from the side wall to be relatively large. However, a relatively small width of the flange surface may affect the connection strength between the battery cell casing and the battery cell casing cover, and a relatively large width of the portion of the flange portion protruding from the side wall may compress the accommodating space, affecting the energy density of the electrochemical apparatus.

In some embodiments of the first aspect, 0 < W1 ≤ 0.7 × T1.

In the above technical solution, by making 0 < W1 ≤ 0.7 × T1, the width of the flange surface can be further larger, while the width of the portion of the flange portion protruding from the side wall is smaller, thereby further increasing a volume of the accommodating space and increasing an energy density of the electrochemical apparatus, and the wall thickness of the side wall can be further smaller, thereby increasing the volume of the accommodating space and increasing the energy density of the electrochemical apparatus.

In some embodiments of the first aspect, a width of the flange surface in the thickness direction of the side wall is W2, meeting W2 ≥ 0.7 × T1.

In the above technical solution, by making the width W2 of the flange surface in the thickness direction of the side wall meet W2 ≥ 0.7 × T1, a connection area between the flange surface and the battery cell casing cover can be larger, a connection between the battery cell casing and the battery cell casing cover is more stable, sealing performance is better, the electrochemical apparatus is less prone to generate a gap or separation between the battery cell casing and the battery cell casing cover due to force or environmental changes, and reliability of the electrochemical apparatus is higher. If W2 is relatively small (for example, less than 0.7 × T1), it may affect the connection strength between the battery cell casing and the battery cell casing cover, thereby affecting the sealing performance of the electrochemical apparatus.

In some embodiments of the first aspect, the flange surface is a plane, and the transition surface is an arc surface.

In the above technical solution, by configuring the flange surface as a plane, the flange surface can better fit with the battery cell casing cover, facilitating a connection between the flange surface and the battery cell casing cover. Configuring the transition surface as an arc surface facilitates preparation of the flange portion.

In some embodiments of the first aspect, at least a portion of the flange portion protrudes from the outer surface of the side wall, and a width of a portion of the flange portion protruding from the outer surface of the side wall in the thickness direction of the side wall is W3, meeting 0.05 mm ≤ W3 ≤ 0.3 mm.

In the above technical solution, at least a portion of the flange portion protrudes from the outer surface of the side wall. Thus, by making a width W3 of a portion of the flange portion protruding from the outer surface of the side wall in the thickness direction of the side wall meet 0.05 mm ≤ W3 ≤ 0.3 mm, a width of the flange surface can be relatively large, a connection area between the battery cell casing and the battery cell casing cover is relatively large, and connection strength is better; furthermore, a space occupied by the portion of the flange portion protruding from the outer surface of the side wall can be reduced, thereby making a volume of the accommodating space larger when a dimension of the electrochemical apparatus is fixed, a volume of the electrode assembly larger, and an energy density of the electrochemical apparatus larger. If W3 is relatively small (for example, less than 0.05 mm), the width of the flange surface is relatively small, a connection area between the battery cell casing and the battery cell casing cover is relatively small, and connection strength is relatively low, when the electrochemical apparatus is subjected to force or environmental changes, a gap or separation may be generated between the battery cell casing and the battery cell casing cover, affecting the sealing performance of the electrochemical apparatus. If W3 is relatively large (for example, greater than 0.3 mm), a space occupied by the portion of the flange portion protruding from the outer surface of the side wall is relatively large, thereby making a volume of the accommodating space relatively small when a dimension of the electrochemical apparatus is fixed, a volume of the electrode assembly relatively small, and an energy density of the electrochemical apparatus also relatively small.

In some embodiments of the first aspect, 0.05 mm ≤ W3 ≤ 0.15 mm.

In the above technical solution, by making 0.05 mm ≤ W3 ≤ 0.15 mm, a space occupied by the portion of the flange portion protruding from the outer surface of the side wall can be further reduced, thereby making a volume of the accommodating space larger when a dimension of the electrochemical apparatus is fixed, a volume of the electrode assembly larger, and an energy density of the electrochemical apparatus larger.

In some embodiments of the first aspect, at least a portion of the flange portion protrudes from the outer surface of the side wall, and a thickness of a portion of the flange portion protruding from the outer surface of the side wall is T2, meeting 0.7 × T1 ≤ T2 ≤ 1.1 × T1.

In the above technical solution, by making a thickness T2 of a portion of the flange portion protruding from the outer surface of the side wall meet 0.7 × T1 ≤ T2 ≤ 1.1 × T1, the flange can have relatively high strength and be less prone to deformation, and sufficient welding depth can be reserved for a welding connection between the battery cell casing and the battery cell casing cover, making connection strength between the battery cell casing and the battery cell casing cover relatively large; furthermore, a width of the transition surface can be relatively small, thereby increasing a volume of the accommodating space and increasing an energy density of the electrochemical apparatus. If T2 is relatively small (for example, less than 0.7 × T1), the flange portion has relatively low strength, may be prone to deformation due to force or environmental changes, and also limits a welding depth between the battery cell casing and the battery cell casing cover, which may affect the connection strength between the battery cell casing and the battery cell casing cover. If T2 is relatively large (for example, greater than 1.1 × T1), it is inconvenient to form a transition surface with a relatively small width, which may affect a volume of the accommodating space, thereby affecting an energy density of the electrochemical apparatus.

In some embodiments of the first aspect, 0.05 mm ≤ T1 ≤ 0.15 mm.

In the above technical solution, by making a wall thickness T1 of the side wall meet 0.05 mm ≤ T1 ≤ 0.15 mm, the battery cell casing can have relatively high strength and be less prone to deformation or damage due to force or environmental changes, and can better play a role in protecting the electrode assembly and maintaining normal operation of the electrochemical apparatus; furthermore, a space occupied by the battery cell casing can be reduced, when a dimension of the electrochemical apparatus is fixed, a larger accommodating space is reserved, making a volume of the electrode assembly larger and an energy density of the electrochemical apparatus higher. If T1 is relatively small (for example, less than 0.05 mm), the battery cell casing has relatively low strength, may generate deformation or damage due to force or environmental changes, affecting a protection role for the electrode assembly and normal operation of the electrochemical apparatus. If T1 is relatively large (for example, greater than 0.15 mm), a space occupied by the battery cell casing is relatively large, when a dimension of the electrochemical apparatus is fixed, a reserved accommodating space is smaller, making a volume of the electrode assembly smaller and an energy density of the electrochemical apparatus smaller.

In some embodiments of the first aspect, 0.05 mm ≤ T1 ≤ 0.1 mm.

In the above technical solution, by making 0.05 mm ≤ T1 ≤ 0.1 mm, a space occupied by the battery cell casing can be further reduced, when a dimension of the electrochemical apparatus is fixed, a larger accommodating space is reserved, making a volume of the electrode assembly larger and an energy density of the electrochemical apparatus higher.

In some embodiments of the first aspect, a thickness of a portion of the flange portion corresponding to the transition surface is T3, meeting T3 > T1.

In the above technical solution, by making a thickness T3 of a portion of the flange portion corresponding to the transition surface meet T3 > T1, a connection between the flange portion and the side wall can be more secure, the flange portion is less prone to separation from the side wall, and an overall structure of the battery cell casing is more stable.

In some embodiments of the first aspect, T3 meets T1 < T3 < 1.5 × T1.

In the above technical solution, by making a thickness T3 of a portion of the flange portion corresponding to the transition surface meet T1 < T3 < 1.5 × T1, when a thickness of the portion of the transition surface is too large, it leads to a decrease in an energy density of the battery cell casing. Therefore, T3 meeting the above conditions balances a relationship between a secure connection of the flange portion and the side wall in the battery cell casing and an energy density of the battery cell.

In some embodiments of the first aspect, a thickness of a portion of the flange portion corresponding to the transition surface is T3, meeting 0.06 mm ≤ T3 ≤ 0.2 mm.

In the above technical solution, a thickness T3 of a portion of the flange portion corresponding to the transition surface meets 0.06 mm ≤ T3 ≤ 0.2 mm, a too small thickness of the portion of the transition surface affects connection strength of the flange portion, and a too large thickness affects an energy density of the battery cell. Therefore, adopting the above solution can ensure the connection strength while reducing energy density loss.

In some embodiments of the first aspect, a thickness of a portion of the flange portion corresponding to the transition surface is T3, meeting 0.09 mm ≤ T3 ≤ 0.12 mm.

In the above technical solution, a thickness T3 of a portion of the flange portion corresponding to the transition surface meets 0.09 mm ≤ T3 ≤ 0.12 mm. Therefore, adopting the above solution can more greatly ensure the connection strength while reducing energy density loss.

According to a second aspect, the present application provides an electrochemical apparatus, including the battery cell casing as described above, a battery cell casing cover, and an electrode assembly, where the electrode assembly is accommodated in the accommodating space, and the battery cell casing cover is arranged on the opening.

In some embodiments of the second aspect, a length of the battery cell casing cover in a first direction is D1, a length of the battery cell casing cover in a second direction is D2, a length of the battery cell casing in the first direction is D3, and a length of the battery cell casing in the second direction is D4, meeting D1 ≤ D3, D2 ≤ D4; and the first direction, the second direction, and a thickness direction of the battery cell casing cover are perpendicular to each other.

In the above technical solution, by making a length D1 of the battery cell casing cover in a first direction thereof, a length D2 of the battery cell casing cover in a second direction thereof, a length D3 of the battery cell casing in the first direction, and a length D4 of the battery cell casing in the second direction meet D1 ≤ D3, D2 ≤ D4, a connection between the battery cell casing and the battery cell casing cover can be facilitated, making a connection between the battery cell casing and the battery cell casing cover more stable, and a possibility of the battery cell casing cover protruding from the battery cell casing can be reduced, which is beneficial to increasing an energy density of the electrochemical apparatus.

In some embodiments of the second aspect, lengths by which two sides of the battery cell casing in the first direction exceed the battery cell casing cover are E1 and E2 respectively, lengths by which two sides of the battery cell casing in the second direction exceed the battery cell casing cover are E3 and E4 respectively, and an average value of E1, E2, E3, and E4 is ‾E, meeting ‾E ≤ 0.05 mm.

In the above technical solution, lengths by which two sides of the battery cell casing in the first direction exceed the battery cell casing cover are E1 and E2 respectively, and lengths by which two sides of the battery cell casing in the second direction exceed the battery cell casing cover are E3 and E4 respectively. Thus, by making an average value ‾E of E1, E2, E3, and E4 meet ‾E ≤ 0.05 mm, a length of a portion of the flange surface not exceeding the battery cell casing cover can be relatively large, that is, a length of a portion of the flange surface connecting with the battery cell casing cover is relatively large, thereby further facilitating a connection between the battery cell casing and the battery cell casing cover, and making a connection between the battery cell casing and the battery cell casing cover more stable, sealing performance of the electrochemical apparatus better, the electrochemical apparatus less prone to generate a gap or separation between the battery cell casing and the battery cell casing cover due to force or environmental changes, and reliability of the electrochemical apparatus higher. If ‾E is relatively large (for example, greater than 0.05 mm), a length of a portion of the flange surface not exceeding the battery cell casing cover is relatively small, that is, a length of a portion of the flange surface connecting with the battery cell casing cover is relatively small, which may affect the connection strength between the battery cell casing and the battery cell casing cover.

In some embodiments of the second aspect, the battery cell casing and the battery cell casing cover are connected by welding or bonding.

In the above technical solution, the battery cell casing and the battery cell casing cover are connected by welding or bonding, which can make a connection between the battery cell casing and the battery cell casing cover stable, sealing performance of the electrochemical apparatus relatively good, the electrochemical apparatus less prone to generate a gap or separation between the battery cell casing and the battery cell casing cover due to force or environmental changes, and reliability of the electrochemical apparatus relatively high.

In some embodiments of the second aspect, the battery cell casing and the battery cell casing cover are connected by welding, a welding portion is formed between the battery cell casing and the battery cell casing cover, a depth of the welding portion in a thickness direction of the bottom wall is H, and a width of the welding portion in the thickness direction of the side wall is W4, meeting H ≥ 0.5 × T1, W4 ≥ T1.

In the above technical solution, by making a depth H of the welding portion in a thickness direction of the bottom wall and a width W4 of the welding portion in the thickness direction of the side wall meet H ≥ 0.5 × T1, W4 ≥ T1, welding strength between the battery cell casing and the battery cell casing cover can be relatively high, a connection between the battery cell casing and the battery cell casing cover is stable, sealing performance of the electrochemical apparatus is relatively good, the electrochemical apparatus is less prone to generate a gap or separation between the battery cell casing and the battery cell casing cover due to force or environmental changes, and reliability of the electrochemical apparatus is relatively high. If H and W4 are smaller (for example, H < 0.5 × T1, W4 < T1), welding strength between the battery cell casing and the battery cell casing cover is lower, the electrochemical apparatus may generate a gap or separation between the battery cell casing and the battery cell casing cover due to force or environmental changes, affecting the reliability of the electrochemical apparatus.

In some embodiments of the second aspect, the battery cell casing and the battery cell casing cover are connected by welding, a welding portion is formed between the battery cell casing and the battery cell casing cover, a portion of the welding portion protrudes from a side edge of the battery cell casing cover, and an outer surface of the protruding portion is an arc surface.

In the above technical solution, a portion of the welding portion protrudes from a side edge of the battery cell casing cover, which can make a volume of the welding portion relatively large, connection strength between the battery cell casing and the battery cell casing cover higher, a connection between the battery cell casing and the battery cell casing cover stable, sealing performance of the electrochemical apparatus relatively good, the electrochemical apparatus less prone to generate a gap or separation between the battery cell casing and the battery cell casing cover due to force or environmental changes, and reliability of the electrochemical apparatus relatively high. Making an outer surface of the portion of the welding portion protruding from the battery cell casing cover an arc surface can reduce a possibility of damage to the welding portion and other apparatuses when the welding portion interferes with other apparatuses.

According to a third aspect, the present application provides an electric apparatus, including the electrochemical apparatus as described above, where the electrochemical apparatus is configured to provide electric energy.

According to a fourth aspect, the present application provides a preparation method of an electrochemical apparatus, including:
stamping a raw material plate to form a battery cell casing;
during the stamping process, extruding and forming a transition surface of a flange portion of the battery cell casing through flattening and negative angle extrusion towards an inner side of the battery cell casing, so that a width W1 of the transition surface in a thickness direction of a side wall of the battery cell casing and a wall thickness T1 of the side wall of the battery cell casing meet 0 < W1 ≤ T1;
installing an electrode assembly in an accommodating space of the battery cell casing; and
arranging a battery cell casing cover on an opening of the battery cell casing, and fixedly connecting the battery cell casing cover with the battery cell casing.

In the above technical solution, during the stamping process, through flattening and negative angle extrusion, a width W1 of the transition surface of the battery cell casing in a thickness direction of the side wall of the battery cell casing and a wall thickness T1 of the side wall of the battery cell casing meet 0 < W1 ≤ T1, making a width of a flange surface of the battery cell casing relatively large, while a width of a portion of the flange portion of the battery cell casing protruding from the side wall is relatively small, which can increase a volume of the accommodating space and increase an energy density of the electrochemical apparatus, and can make the wall thickness of the side wall relatively small, thereby further increasing the volume of the accommodating space and increasing the energy density of the electrochemical apparatus.

In some embodiments of the fourth aspect, the method of fixedly connecting the battery cell casing cover with the battery cell casing includes:
welding and connecting the battery cell casing cover with the battery cell casing through swing welding.

In the above technical solution, by welding and connecting the battery cell casing cover with the battery cell casing through swing welding, welding strength between the battery cell casing and the battery cell casing cover can be further increased, making a connection between the battery cell casing and the battery cell casing cover stable, sealing performance of the electrochemical apparatus relatively good, the electrochemical apparatus less prone to generate a gap or separation between the battery cell casing and the battery cell casing cover due to force or environmental changes, and reliability of the electrochemical apparatus relatively high.

### BRIEF DESCRIPTION OF THE DRAWINGS

In order to more clearly illustrate the technical solutions of some embodiments of the present application, the accompanying drawings to be used in these embodiments of the present application will be briefly introduced below. It should be understood that the following drawings only illustrate some embodiments of the present application, and therefore should not be regarded as limiting the scope. For those of ordinary skill in the art, other related drawings can also be obtained based on these drawings without creative effort.
FIG. 1 is a schematic diagram of a three-dimensional structure of a battery cell casing according to some embodiments of the present application;
FIG. 2 is a schematic structural diagram of a battery cell casing according to some embodiments of the present application from one perspective;
FIG. 3 is a schematic cross-sectional view of the battery cell casing shown in FIG. 2 along direction A-A;
FIG. 4 is a schematic structural diagram of a partial enlargement at position B of the battery cell casing shown in FIG. 3;
FIG. 5 is a schematic diagram of a three-dimensional structure of an electrochemical apparatus according to some embodiments of the present application;
FIG. 6 is a schematic diagram of an exploded structure of an electrochemical apparatus according to some embodiments of the present application;
FIG. 7 is a schematic structural diagram of an electrochemical apparatus according to some embodiments of the present application from one perspective;
FIG. 8 is a schematic cross-sectional view of the electrochemical apparatus shown in FIG. 7 along direction C-C;
FIG. 9 is a schematic structural diagram of a partial enlargement at position D of the electrochemical apparatus shown in FIG. 8;
FIG. 10 is a schematic structural diagram of a partial enlargement at position D of the electrochemical apparatus shown in FIG. 8 in another state; and
FIG. 11 is a schematic flowchart of a preparation method of an electrochemical apparatus according to some embodiments of the present application.

Reference signs: 10-electrochemical apparatus; 100-battery cell casing; 101-accommodating space; 102-opening; 110-bottom wall; 120-side wall; 121-injection hole; 130-flange portion; 140-terminal post; 200-battery cell casing cover; 210-welding portion; 211-bottom surface; 300-electrode assembly; 310-first electrical connection member; 320-second electrical connection member; X-first direction; Y-second direction; and Z-third direction.

### DETAILED DESCRIPTION OF EMBODIMENTS

In order to make the objectives, technical solutions, and advantages of the present application clearer, the technical solutions in some embodiments of the present application will be clearly described below in conjunction with the accompanying drawings in these embodiments of the present application. Obviously, the described embodiments are some embodiments of the present application, rather than all embodiments. Based on some embodiments in the present application, all other embodiments obtained by those of ordinary skill in the art without creative effort belong to the protection scope of the present application.

Unless otherwise defined, all technical and scientific terms used in the present application have the same meanings as commonly understood by those skilled in the technical field of the present application. The terms used in the specification of the present application in the present application are only for the purpose of describing specific embodiments and are not intended to limit the present application. The terms "including" and "having" and any variations thereof in the specification and claims of the present application and the above description of the drawings are intended to cover non-exclusive inclusions.

The terms "first", "second", and the like in the specification and claims of the present application or the above drawings are used to distinguish different objects, and are not used to describe a specific order or primary-secondary relationship.

The mention of "an embodiment" in the present application means that specific features, structures, or characteristics described in conjunction with the embodiment can be included in at least one embodiment of the present application. The appearance of the phrase in various places in the specification does not necessarily refer to the same embodiment, nor is it an independent or alternative embodiment that is mutually exclusive with other embodiments.

In the description of the present application, it should be noted that, unless otherwise clearly specified and limited, the terms "mounting", "connection", "joining", "attachment" should be understood in a broad sense, for example, it can be a fixed connection, a detachable connection, or an integral connection; it can be a direct connection, or an indirect connection through an intermediary, and it can be the communication between two elements. For those of ordinary skill in the art, the specific meanings of the above terms in the present application can be understood according to specific circumstances.

In some embodiments of the present application, the same reference numerals represent the same components, and for brevity, detailed descriptions of the same components in different embodiments are omitted. It should be understood that the thicknesses, lengths, widths and other dimensions of various components in these embodiments of the present application shown in the drawings, as well as the overall thickness, length, width and other dimensions of the integrated device, are only exemplary illustrations and should not constitute any limitation to the present application.

With the development of the new energy industry, batteries are gradually developing towards high energy density and high power density. However, the volume of the battery compartment in electric apparatuses for accommodating electrochemical apparatus is limited, making the method of increasing the energy density of the electrochemical apparatus by increasing the volume of the electrochemical apparatus limited. Therefore, the feasibility of increasing the energy density of the electrochemical apparatus by changing the structure of the electrochemical apparatus itself is higher.

A battery cell casing typically includes a bottom wall and a side wall, where the side wall is provided around the bottom wall, and the side wall and the bottom wall together enclose an accommodating space having an opening, so that an electrode assembly can be accommodated in the accommodating space through the opening. After the electrode assembly is installed, a battery cell casing cover needs to be provided on the battery cell casing to cover the opening, so that the accommodating space is isolated from the outside. Currently, there are mainly two connection methods for the battery cell casing and the battery cell casing cover. One is the rotary cutting housing plus top welding method, specifically, the battery cell casing is not provided with a flange portion, the battery cell casing cover abuts against a top surface of the side wall of the battery cell casing, and the battery cell casing cover is welded to the top surface of the side wall. In order to make the top surface of the side wall have sufficient welding area, the side wall needs to have a relatively large thickness, which will cause the battery cell casing to occupy a relatively large space, compressing the volume of the accommodating space, reducing the volume of the electrode assembly, and affecting the energy density of the electrochemical apparatus. The other is the large flange plus top welding method, specifically, a flange portion with a relatively large width is provided at an end of the side wall of the battery cell casing away from the bottom wall, the flange portion protrudes in a direction away from the accommodating space and is capable of forming a flange surface for connecting to the battery cell casing cover, which can reduce the thickness of the side wall, but the flange portion will increase the overall dimension of the battery cell casing. When the overall dimension of the battery cell casing remains unchanged, providing the flange portion will compress the accommodating space, reducing the volume of the electrode assembly, and affecting the energy density of the electrochemical apparatus.

In order to increase the energy density of the electrochemical apparatus, the present application provides a battery cell casing, where the battery cell casing includes a bottom wall, a side wall, and a flange portion, where the side wall being provided around the bottom wall, and the side wall and the bottom wall together enclose an accommodating space having an opening, the flange portion is provided at an end of the side wall away from the bottom wall, at least a portion of the flange portion protrudes from an inner surface and/or an outer surface of the side wall; and the flange portion has a flange surface and a transition surface, where the flange surface is substantially perpendicular to the side wall and configured to connect to a battery cell casing cover; the transition surface curvedly connects the flange surface and the inner surface and/or the outer surface of the side wall, a width of the transition surface in a thickness direction of the side wall is W1, and a wall thickness of the side wall is T1, meeting 0 < W1 ≤ T1.

In the battery cell casing with this structure, the battery cell casing includes a bottom wall, a side wall, and a flange portion, where the side wall is provided around the bottom wall, and the side wall and the bottom wall together enclose an accommodating space having an opening, so that an electrode assembly can be accommodated in the accommodating space through the opening; the flange portion is provided at an end of the side wall away from the bottom wall, and at least a portion of the flange portion protrudes from the outer surface of the side wall, so that the flange portion can be configured to connect to a battery cell casing cover, so as to increase a connection area with the battery cell casing cover; the flange portion has a flange surface and a transition surface, where the flange surface is substantially perpendicular to the side wall and configured to connect to the battery cell casing cover; the transition surface curvedly connects the flange surface and the inner surface of the side wall, a width of the transition surface in a thickness direction of the side wall is W1, and a wall thickness of the side wall is T1, meeting 0 < W1 ≤ T1, so that a width of the flange surface is relatively large, while a width of a portion of the flange portion protruding from the side wall is relatively small. This can make an occupied space of the battery cell casing relatively small, thereby increasing a volume of the accommodating space and increasing an energy density of the electrochemical apparatus, and can make the wall thickness of the side wall relatively small, thereby further increasing the volume of the accommodating space and increasing the energy density of the electrochemical apparatus. If W1 is relatively large (for example, greater than T1), it may cause the width of the flange surface to be relatively small or the width of the portion of the flange portion protruding from the side wall to be relatively large. However, a relatively small width of the flange surface may affect the connection strength between the battery cell casing and the battery cell casing cover, and a relatively large width of the portion of the flange portion protruding from the side wall may compress the accommodating space, affecting the energy density of the electrochemical apparatus.

An embodiment of the present application provides an electrochemical apparatus including the battery cell casing, where the electrochemical apparatus may be a secondary battery or a primary battery, for example, it may be a lithium-ion battery, a sodium-ion battery, or a magnesium-ion battery, and some embodiments of the present application do not limit this. The electrochemical apparatus may be in the shape of a cylinder, a flat body, a rectangular parallelepiped, other shapes, or the like, and some embodiments of the present application do not limit this.

An embodiment of the present application provides an electric apparatus using the electrochemical apparatus as a power source, where the electric apparatus may be, but is not limited to, a mobile phone, a tablet, a notebook computer, an electric toy, an electric tool, an electric bicycle, an electric vehicle, a ship, and a spacecraft.

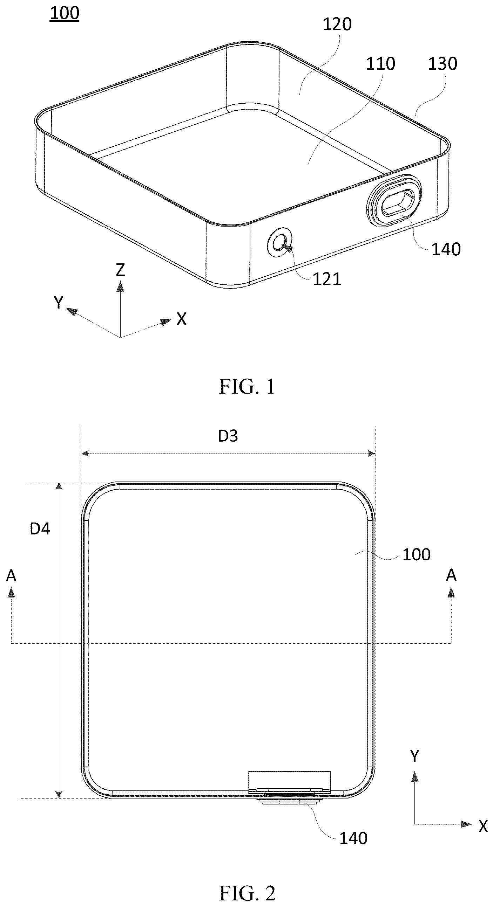

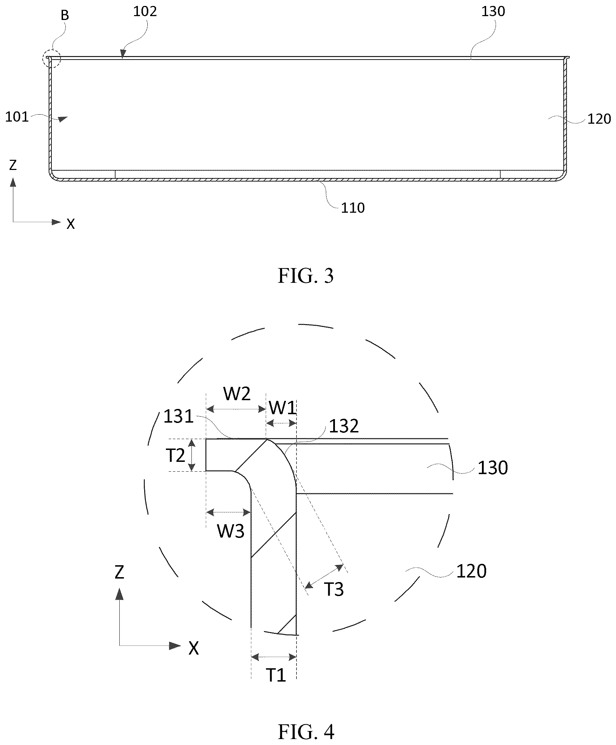

Referring to FIG. 1 to FIG. 4, FIG. 1 is a schematic diagram of a three-dimensional structure of a battery cell casing according to some embodiments of the present application, FIG. 2 is a schematic structural diagram of a battery cell casing according to some embodiments of the present application from one perspective, FIG. 3 is a schematic cross-sectional view of the battery cell casing shown in FIG. 2 along direction A-A, FIG. 4 is a schematic structural diagram of a partial enlargement at position B of the battery cell casing shown in FIG. 3. An embodiment of the present application provides a battery cell casing 100, where the battery cell casing 100 includes a bottom wall 110, a side wall 120, and a flange portion 130, where the side wall 120 is provided around the bottom wall 110, and the side wall 120 and the bottom wall 110 together enclose an accommodating space 101 having an opening 102, the flange portion 130 is provided at an end of the side wall 120 away from the bottom wall 110, and at least a portion of the flange portion 130 protrudes from an outer surface of the side wall 120; and the flange portion 130 has a flange surface 131 and a transition surface 132, where the flange surface 131 is substantially perpendicular to the side wall 120 and configured to connect to a battery cell casing cover 200; the transition surface 132 curvedly connects the flange surface 131 and an inner surface of the side wall 120, a width of the transition surface 132 in a thickness direction of the side wall 120 is W1, and a wall thickness of the side wall 120 is T1, meeting 0 < W1 ≤ T1.

The flange surface 131 being substantially perpendicular to the side wall 120 means that a difference between an included angle between a plane where the flange surface 131 is located and a plane where an outer surface or an inner surface of the side wall 120 is located and 90° is within a range of a preset difference value.

In some embodiments, the battery cell casing 100 may be made of a material with relatively high strength, such as metal materials like steel or aluminum alloy, so that the battery cell casing 100 has relatively high force-bearing performance, thereby enabling the battery cell casing 100 less prone to deformation or damage due to force or environmental changes, and further enabling a higher reliability of the electrochemical apparatus 10.

In some other embodiments, the battery cell casing 100 may alternatively be made of non-metallic materials with relatively high strength, such as carbon fiber or rigid plastic.

A flange is a part for mutual connection between two components, used for connection between component ends. Flange connection refers to a detachable connection as a group of combined sealing structures where a component provided with a flange is connected to another component. All connecting parts that are connected and sealed simultaneously around two planes by a fixed connection method are generally called "flanges".

In some embodiments, the flange portion 130 is provided around the side wall 120 and extends in a direction away from the accommodating space 101, so that at least a portion of the flange portion 130 protrudes from the outer surface of the side wall 120.

In some embodiments, the bottom wall 110, the side wall 120, and the flange portion 130 are integrally formed, which can make an overall structure of the battery cell casing 100 stable, less prone to form a gap or separation between the bottom wall 110 and the side wall 120, or between the side wall 120 and the flange portion 130 due to force or environmental changes, and sealing performance of the battery cell casing 100 is better.

In some other embodiments, the bottom wall 110, the side wall 120, and the flange portion 130 may alternatively be separately prepared and formed, and then fixedly connected through welding, bonding, or the like.

In some embodiments, a thickness direction of the side wall 120 is perpendicular to the third direction Z, and the thickness direction of the side wall 120 includes the first direction X and the second direction Y.

For example, as shown in FIG. 2 and FIG. 4, a width of the transition surface 132 of two portions of the flange portion 130 opposite in the first direction X is a dimension of the transition surface 132 in the first direction X, and a width of the transition surface 132 of two portions of the flange portion 130 opposite in the second direction Y is a dimension of the transition surface 132 in the second direction Y.

For example, as shown in FIG. 2 and FIG. 4, a wall thickness of two portions of the side wall 120 opposite in the first direction X is a dimension of the side wall 120 in the first direction X, and a wall thickness of two portions of the side wall 120 opposite in the second direction Y is a dimension of the side wall 120 in the second direction Y.

The battery cell casing 100 includes a bottom wall 110, a side wall 120, and a flange portion 130, where the side wall 120 is provided around the bottom wall 110, and the side wall 120 and the bottom wall 110 together enclose an accommodating space 101 having an opening 102, so that an electrode assembly 300 can be accommodated in the accommodating space 101 through the opening 102; the flange portion 130 is provided at an end of the side wall 120 away from the bottom wall 110, and at least a portion of the flange portion 130 protrudes from an outer surface of the side wall 120, so that the flange portion 130 can be configured to connect with the battery cell casing cover 200, so as to increase a connection area with the battery cell casing cover 200, and at the same time, an area of the opening 102 is relatively large, facilitating installation of the electrode assembly 300; and the flange portion 130 has a flange surface 131 and a transition surface 132, where the flange surface 131 is substantially perpendicular to the side wall 120 and configured to connect to the battery cell casing cover 200; the transition surface 132 curvedly connects the flange surface 131 and an inner surface of the side wall 120, a width of the transition surface 132 in a thickness direction of the side wall 120 is W1, and a wall thickness of the side wall 120 is T1, meeting 0 < W1 ≤ T1, for example, W1 can be 0.5 × T1, 0.8 × T1, or T1, so that a width of the flange surface 131 is relatively large, while a width of a portion of the flange portion 130 protruding from the side wall 120 is relatively small, thereby increasing a volume of the accommodating space 101, increasing an energy density of the electrochemical apparatus 10, and enabling the wall thickness of the side wall 120 relatively small, thus further increasing the volume of the accommodating space 101 and increasing the energy density of the electrochemical apparatus 10. If W1 is relatively large (for example, greater than T1), it may cause the width of the flange surface 131 to be relatively small or the width of the portion of the flange portion 130 protruding from the side wall 120 to be relatively large. However, a relatively small width of the flange surface 131 may affect the connection strength between the battery cell casing 100 and the battery cell casing cover 200, and a relatively large width of the portion of the flange portion 130 protruding from the side wall 120 may compress the accommodating space 101, affecting the energy density of the electrochemical apparatus 10.

In some other embodiments, a portion of the flange portion 130 can also protrude from an inner surface of the side wall 120, the transition surface 132 curvedly connecting the flange surface 131 and an outer surface of the side wall 120, which can reduce an occupied space of the battery cell casing 100 and is beneficial to increasing an energy density of the electrochemical apparatus 10. By making a width W1 of the transition surface 132 in a thickness direction of the side wall 120 and a wall thickness T1 of the side wall 120 meet 0 < W1 ≤ T1, a width of the flange surface 131 is relatively large, while a width of a portion of the flange portion 130 protruding from the side wall 120 is relatively small, facilitating installation of the electrode assembly 300. If W1 is relatively large (for example, greater than T1), it may cause the width of the flange surface 131 to be relatively small or the width of the portion of the flange portion 130 protruding from the side wall 120 to be relatively large. However, a relatively small width of the flange surface 131 may affect the connection strength between the battery cell casing 100 and the battery cell casing cover 200, and a relatively large width of the portion of the flange portion 130 protruding from the side wall 120 may affect installation of the electrode assembly 300, thereby causing a smaller volume of the electrode assembly 300 and affecting the energy density of the electrochemical apparatus 10.

In some other embodiments, a portion of the flange portion 130 can be provided protruding from an inner surface of the side wall 120, and another portion can be provided protruding from an outer surface of the side wall 120, the flange portion 130 has two transition surfaces 132 formed, one transition surface 132 curvedly connecting the flange surface 131 and the outer surface of the side wall 120, and the other transition surface 132 curvedly connecting the flange surface 131 and the inner surface of the side wall 120, which can further increase a width of the flange surface 131 and improve the connection strength between the battery cell casing 100 and the battery cell casing cover 200. By making a width W1 of the transition surface 132 in a thickness direction of the side wall 120 and a wall thickness T1 of the side wall 120 meet 0 < W1 ≤ T1, the flange portion 130 occupies a relatively small accommodating space 101, which is beneficial to increasing the energy density of the electrochemical apparatus 10.

In some embodiments, 0 < W1 ≤ 0.7 × T1, for example, W1 may be 0.7 × T1, 0.6 × T1, or 0.4 × T1.

By making 0 < W1 ≤ 0.7 × T1, a width of the flange surface 131 can be further larger, while a width of a portion of the flange portion 130 protruding from the side wall 120 is smaller. This can further increase a volume of the accommodating space 101 and increase an energy density of the electrochemical apparatus 10, and can make the wall thickness of the side wall 120 smaller, thereby increasing the volume of the accommodating space 101 and increasing the energy density of the electrochemical apparatus 10.

In some embodiments, a width of the flange surface 131 in a thickness direction of the side wall 120 is W2, meeting W2 ≥ 0.7 × T1, for example, W2 may be 0.7 × T1, 0.8 × T1, or T1.

For example, as shown in FIG. 2 and FIG. 4, a width of the flange surface 131 of two portions of the flange portion 130 opposite in the first direction X is a dimension of the flange surface 131 in the first direction X, and a width of the flange surface 131 of two portions of the flange portion 130 opposite in the second direction Y is a dimension of the flange surface 131 in the second direction Y.

By making the width W2 of the flange surface 131 in the thickness direction of the side wall 120 meet W2 ≥ 0.7 × T1, a connection area between the flange surface 131 and the battery cell casing cover 200 can be larger, a connection between the battery cell casing 100 and the battery cell casing cover 200 is more stable, sealing performance is better, the electrochemical apparatus 10 is less prone to generate a gap or separation between the battery cell casing 100 and the battery cell casing cover 200 due to force or environmental changes, and reliability of the electrochemical apparatus 10 is higher. If W2 is relatively small (for example, less than 0.7 × T1), it may affect the connection strength between the battery cell casing 100 and the battery cell casing cover 200, thereby affecting the sealing performance of the electrochemical apparatus 10.

In some embodiments, the flange surface 131 is a plane, and the transition surface 132 is an arc surface.

In some embodiments, the flange surface 131 is perpendicular to the side wall 120, that is, the flange surface 131 is perpendicular to an inner surface or an outer surface of the side wall 120, and the inner surface or the outer surface of the side wall 120 is parallel to the third direction Z.

By configuring the flange surface 131 as a plane and making the flange surface 131 perpendicular to an inner surface or an outer surface of the side wall 120, that is, making the flange surface 131 parallel to direction X-Y, the flange surface 131 can better fit with the battery cell casing cover 200, facilitating a connection between the flange surface 131 and the battery cell casing cover 200. Configuring the transition surface 132 as an arc surface facilitates preparation of the flange portion 130. The flange portion 130 can be formed by bending a side wall of the battery cell casing 100.

In some embodiments, a width of a portion of the flange portion 130 protruding from the outer surface of the side wall 120 in a thickness direction of the side wall 120 is W3, meeting 0.05 mm ≤ W3 ≤ 0.3 mm, for example, W3 may be 0.05 mm, 0.1 mm, or 0.3 mm.

For example, as shown in FIG. 2 and FIG. 4, a width of a portion of the flange portion 130 protruding from the side wall 120 of two portions of the flange portion 130 opposite in the first direction X is a dimension of the portion of the flange portion 130 protruding from the side wall 120 in the first direction X, and a width of a portion of the flange portion 130 protruding from the side wall 120 of two portions of the flange portion 130 opposite in the second direction Y is a dimension of the portion of the flange portion 130 protruding from the side wall 120 in the second direction Y.

By making a width W3 of a portion of the flange portion 130 protruding from the outer surface of the side wall 120 in a thickness direction of the side wall 120 meet 0.05 mm ≤ W3 ≤ 0.3 mm, a width of the flange surface 131 can be relatively large, a connection area between the battery cell casing 100 and the battery cell casing cover 200 is relatively large, and connection strength is better; furthermore, a space occupied by the portion of the flange portion 130 protruding from the outer surface of the side wall 120 can be reduced, thereby making a volume of the accommodating space 101 larger when a dimension of the electrochemical apparatus 10 is fixed, a volume of the electrode assembly 300 larger, and an energy density of the electrochemical apparatus 10 larger. If W3 is relatively small (for example, less than 0.05 mm), the width of the flange surface 131 is relatively small, a connection area between the battery cell casing 100 and the battery cell casing cover 200 is relatively small, and connection strength is relatively low, when the electrochemical apparatus 10 is subjected to force or environmental changes, a gap or separation may be generated between the battery cell casing 100 and the battery cell casing cover 200, affecting the sealing performance of the electrochemical apparatus 10. If W3 is relatively large (for example, greater than 0.3 mm), a space occupied by the portion of the flange portion 130 protruding from the outer surface of the side wall 120 is relatively large, thereby making a volume of the accommodating space 101 relatively small when a dimension of the electrochemical apparatus 10 is fixed, a volume of the electrode assembly 300 relatively small, and an energy density of the electrochemical apparatus 10 also relatively small.

In some embodiments, 0.05 mm ≤ W3 ≤ 0.15 mm, for example, W3 may be 0.05 mm, 0.1 mm, or 0.15 mm.

By making 0.05 mm ≤ W3 ≤ 0.15 mm, a space occupied by the portion of the flange portion 130 protruding from the outer surface of the side wall 120 can be further reduced, thereby making a volume of the accommodating space 101 larger when a dimension of the electrochemical apparatus 10 is fixed, a volume of the electrode assembly 300 larger, and an energy density of the electrochemical apparatus 10 larger.

In some embodiments, a thickness of a portion of the flange portion 130 protruding from the outer surface of the side wall 120 is T2, meeting 0.7 × T1 ≤ T2 ≤ 1.1 × T1, for example, T2 may be 0.7 × T1, 0.9 × T1, or 1.1 × T1.

In some embodiments, a thickness of a portion of the flange portion 130 protruding from the outer surface of the side wall 120 is a dimension of the flange portion 130 in a thickness direction of the bottom wall 110 (the third direction Z).

In some embodiments, a thickness direction of the bottom wall 110 is perpendicular to a thickness direction of the side wall 120.

In some embodiments, after the battery cell casing 100 is prepared and formed, a width W1 of the transition surface 132 can also be reduced through cutting. For example, cutting a top surface of the battery cell casing 100 in a direction perpendicular to a thickness direction of the bottom wall 110 of the battery cell casing 100 (a direction parallel to plane X-Y) can further reduce a width W1 of the transition surface 132 and increase a width W2 of the flange surface 131, and a thickness T2 of the portion of the flange portion 130 protruding from the outer surface of the side wall 120 also decrease.

In some embodiments, during the preparation process of the battery cell casing 100, the raw material plate can be extruded towards an end of the side wall 120 of the battery cell casing 100 away from the bottom wall 110, so that a thickness T2 of the portion of the flange portion 130 protruding from the outer surface of the side wall 120 can be greater than a wall thickness T1 of the side wall 120.

By making a thickness T2 of a portion of the flange portion 130 protruding from the outer surface of the side wall 120 meet 0.7 × T1 ≤ T2 ≤ 1.1 × T1, the flange portion 130 can have relatively high strength and be less prone to deformation, and sufficient welding depth can be reserved for a welding connection between the battery cell casing 100 and the battery cell casing cover 200, making connection strength between the battery cell casing 100 and the battery cell casing cover 200 relatively large; furthermore, a width of the transition surface 132 can be relatively small, thereby increasing a volume of the accommodating space 101 and increasing an energy density of the electrochemical apparatus 10. If T2 is relatively small (for example, less than 0.7 × T1), the flange portion 130 has relatively low strength, may be prone to deformation due to force or environmental changes, and also limits a welding depth between the battery cell casing 100 and the battery cell casing cover 200, which may affect the connection strength between the battery cell casing 100 and the battery cell casing cover 200. If T2 is relatively large (for example, greater than 1.1 × T1), it is inconvenient to form a transition surface 132 with a relatively small width, which may affect a volume of the accommodating space 101, thereby affecting an energy density of the electrochemical apparatus 10.

In some embodiments, 0.05 mm ≤ T1 ≤ 0.15 mm, for example, T1 may be 0.05 mm, 0.09 mm, or 0.15 mm.

By making a wall thickness T1 of the side wall 120 meet 0.05 mm ≤ T1 ≤ 0.15 mm, the battery cell casing 100 can have relatively high strength and be less prone to deformation or damage due to force or environmental changes, and can better play a role in protecting the electrode assembly 300 and maintaining normal operation of the electrochemical apparatus 10; furthermore, a space occupied by the battery cell casing 100 can be reduced, when a dimension of the electrochemical apparatus 10 is fixed, a larger accommodating space 101 is reserved, making a volume of the electrode assembly 300 larger and an energy density of the electrochemical apparatus 10 higher. If T1 is relatively small (for example, less than 0.05 mm), the battery cell casing 100 has relatively low strength, may generate deformation or damage due to force or environmental changes, affecting a protection role for the electrode assembly 300 and normal operation of the electrochemical apparatus 10. If T1 is relatively large (for example, greater than 0.15 mm), a space occupied by the battery cell casing 100 is relatively large, when a dimension of the electrochemical apparatus 10 is fixed, a reserved accommodating space 101 is smaller, making a volume of the electrode assembly 300 smaller and an energy density of the electrochemical apparatus 10 smaller.

In some embodiments, 0.05 mm ≤ T1 ≤ 0.1 mm, for example, T1 may be 0.05 mm, 0.07 mm, or 0.1 mm.

By making 0.05 mm ≤ T1 ≤ 0.1 mm, a space occupied by the battery cell casing 100 can be further reduced, when a dimension of the electrochemical apparatus 10 is fixed, a larger accommodating space 101 is reserved, making a volume of the electrode assembly 300 larger and an energy density of the electrochemical apparatus 10 higher.

In some embodiments, a thickness of a portion of the flange portion 130 corresponding to the transition surface 132 is T3, meeting T3 > T1.

A thickness of a portion of the flange portion 130 corresponding to the transition surface 132 is a dimension of the flange portion 130 in a direction perpendicular to the transition surface 132. FIG. 4 exemplarily marks a thickness at one place of the flange portion 130 corresponding to the transition surface 132.

By making a thickness T3 of a portion of the flange portion 130 corresponding to the transition surface 132 meet T3 > T1, a connection between the flange portion 130 and the side wall 120 can be more secure, the flange portion 130 is less prone to separation from the side wall 120, and an overall structure of the battery cell casing 100 is more stable.

In some other embodiments, T3 meets: T1 < T3 < 1.5 × T1.

By making a thickness T3 of a portion of the flange portion 130 corresponding to the transition surface 132 meet T1 < T3 < 1.5 × T1, when a thickness of the portion of the transition surface 132 is too large, it leads to a decrease in an energy density of the battery cell casing 100. Therefore, T3 meeting the above conditions balances a relationship between a secure connection of the flange portion 130 and the side wall 120 in the battery cell casing 100 and an energy density of the battery cell.

In some embodiments, a thickness of a portion of the flange portion corresponding to the transition surface is T3, meeting 0.06 mm ≤ T3 ≤ 0.2 mm.

By designing a thickness T3 of a portion of the flange portion corresponding to the transition surface to meet 0.06 mm ≤ T3 ≤ 0.2 mm, a too small thickness of the portion of the transition surface affects connection strength of the flange portion, and a too large thickness affects an energy density of the battery cell. Therefore, adopting the above solution can ensure the connection strength while reducing energy density loss.

In some other embodiments, a thickness of a portion of the flange portion corresponding to the transition surface is T3, meeting 0.09 mm ≤ T3 ≤ 0.12 mm.

By designing a thickness T3 of a portion of the flange portion corresponding to the transition surface to meet 0.09 mm ≤ T3 ≤ 0.12 mm, the connection strength can be ensured to a greater extent while reducing energy density loss, where the dimension of T3 can be in a range of any two values among 0.09 mm, 0.1 mm, 0.11 mm, and 0.12 mm.

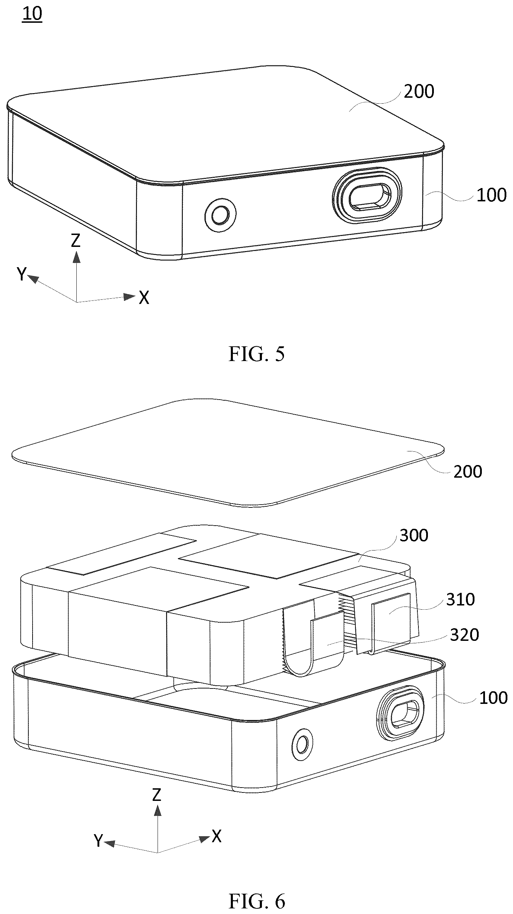

Referring to FIG. 5 and FIG. 6, FIG. 5 is a schematic diagram of a three-dimensional structure of an electrochemical apparatus according to some embodiments of the present application, and FIG. 6 is a schematic diagram of an exploded structure of an electrochemical apparatus according to some embodiments of the present application. An embodiment of the present application provides an electrochemical apparatus 10, including the battery cell casing 100 of any one of the above solutions, a battery cell casing cover 200, and an electrode assembly 300, where the electrode assembly 100 is accommodated in the accommodating space 101, and the battery cell casing cover 200 is arranged on the opening 102.

In some embodiments, the battery cell casing cover 200 may be made of a material with relatively high strength, such as metal materials like steel or aluminum alloy, so that the battery cell casing cover 200 has relatively high force-bearing performance, thereby enabling the battery cell casing cover 200 less prone to deformation or damage due to force or environmental changes, and further enabling a higher reliability of the electrochemical apparatus 10.

In some other embodiments, the battery cell casing cover 200 may alternatively be made of non-metallic materials with relatively high strength, such as carbon fiber or rigid plastic.

The electrochemical apparatus includes a battery casing 100, a battery cell casing cover 200, an electrode assembly 300, and an electrolyte, where the casing 100 and the battery cell casing cover 200 are configured to accommodate the electrode assembly 300 and the electrolyte. The electrode assembly 300 is composed of a positive electrode plate, a negative electrode plate, and a separator. The electrochemical apparatus mainly works by movement of metal ions between the positive electrode plate and the negative electrode plate. The positive electrode plate includes a positive electrode current collector and a positive electrode active material layer, where the positive electrode active material layer is applied on a surface of the positive electrode current collector, a portion of the positive electrode current collector not coated with the positive electrode active material layer serves as a positive electrode tab, so as to realize input or output of electric energy of the positive electrode plate through the positive electrode tab. Taking a lithium-ion battery as an example, a material of the positive electrode current collector may be aluminum, and the positive electrode active material may be lithium cobalt oxide, lithium iron phosphate, ternary material, lithium manganese oxide, or the like. The negative electrode plate includes a negative electrode current collector and a negative electrode active material layer, where the negative electrode active material layer is applied on a surface of the negative electrode current collector, a portion of the negative electrode current collector not coated with the negative electrode active material layer serves as a negative electrode tab, so as to realize input or output of electric energy of the negative electrode plate through the negative electrode tab. A material of the negative electrode current collector may be copper, and the negative electrode active material may be carbon material, silicon material, or the like. A material of the separator may be polypropylene (PP), polyethylene (PE), or the like. The electrolyte may include organic solvent, electrolyte lithium salt, or the like.

In some embodiments, the electrode assembly 300 may be a laminated structure formed by stacking the negative electrode plate, the separator, and the positive electrode plate.

In some other embodiments, the electrode assembly 300 may alternatively be a wound structure formed by winding the negative electrode plate, the separator, and the positive electrode plate.

In some embodiments, the electrochemical apparatus 10 is provided in a rectangular parallelepiped shape, and top corners are provided with rounded corners, which can better adapt to the rounded corner battery compartment in the electric apparatus.

In some other embodiments, top corners of the electrochemical apparatus 10 may alternatively be provided with square corners.

In some embodiments, a thickness direction of the battery cell casing cover 200 is parallel to the third direction Z, and the first direction X, the second direction Y, and the third direction Z are perpendicular to each other pairwise.

Referring to FIG. 1 and FIG. 6, in some embodiments, an injection hole 121 is provided on the battery casing 100, configured to inject electrolyte into the accommodating space 101 through the injection hole 121 after the battery cell casing 100 and the battery cell casing cover 200 are assembled, so that the electrolyte can wet the electrode assembly 300.

In some embodiments, the injection hole 121 can be provided on the side wall 120 of the battery casing 100, facilitating injection of electrolyte into the accommodating space 101 through the injection hole 121.

In some embodiments, the electrochemical apparatus 10 further includes an injection plug (not shown in the figures), where the injection plug is configured to block the injection hole 121 after the electrolyte is injected, so as to achieve sealing of the electrochemical apparatus 10 and reduce a possibility of external moisture entering the accommodating space 101 or electrolyte leaking from the accommodating space 101.

In some embodiments, the injection hole 121 may be a circular hole, facilitating injection of electrolyte through the injection hole 121, and also facilitating blocking of the injection hole 121 by the injection plug, reducing a possibility of electrolyte leakage.

In some other embodiments, the injection hole 121 may alternatively be a square hole, an irregular hole, or the like.

In some embodiments, the electrochemical apparatus 10 further includes a first electrical connection member 310 and a second electrical connection member 320, a terminal post 140 penetrating the battery casing 100 is provided on the battery casing 100, one end of the first electrical connection member 310 is electrically connected to a positive electrode tab on the positive electrode plate, and another end is electrically connected to the terminal post 140, so that an external apparatus can be electrically connected to the positive electrode plate through the terminal post 140 and the first electrical connection member 310. One end of the second electrical connection member 320 is electrically connected to a negative electrode tab on the negative electrode plate, and another end is electrically connected to the battery cell casing 100, so that an external apparatus can be electrically connected to the negative electrode plate through the casing 100 and the second electrical connection member 320.

In some other embodiments, the electrochemical apparatus 10 further includes a first electrical connection member 310 and a second electrical connection member 320, two terminal posts 140 penetrating the battery casing 100 are provided on the battery casing 100, one end of the first electrical connection member 310 is electrically connected to the positive electrode plate, and the another end is electrically connected to one of the terminal posts 140, so that an external apparatus can be electrically connected to the positive electrode plate through the terminal post 140 and the first electrical connection member 310. One end of the second electrical connection member 320 is electrically connected to the negative electrode plate, and the another end is electrically connected to the another terminal post 140, so that an external apparatus can be electrically connected to the negative electrode plate through the terminal post 140 and the second electrical connection member 320.

In some embodiments, the first electrical connection member 310 and the positive electrode tab may be connected through welding, and the second electrical connection member 320 and the negative electrode tab may be connected through welding.

In some other embodiments, the first electrical connection member 310 and the positive electrode tab can be integrally formed, and the second electrical connection member 320 and the negative electrode tab can be integrally formed.

In some embodiments, the first electrical connection member 310 and the second electrical connection member 320 can be made of materials with better conductivity, such as metal materials like lead or copper.

In some embodiments, the terminal post 140 is provided in an elliptical shape, which can increase a cross-sectional area of the terminal post 140 (a cross-section of the terminal post 140 on the X-Z plane) when a thickness of the battery cell casing 100 is limited, thereby increasing a connection area between the terminal post 140 and the second electrical connection member 310 and the external apparatus, and improving a connection reliability between the terminal post 140 and the second electrical connection member 310 and the external apparatus.

In some other embodiments, the terminal post 140 may alternatively be provided in a circular or square shape.

In some embodiments, the terminal post 140 can be made of a material with better conductivity, such as metal materials like lead or copper.

In some embodiments, the terminal post 140 can be provided on the side wall 120 of the battery casing 100, facilitating electrical connection of the terminal post 140 with an external apparatus.

In some embodiments, a projection of the injection hole 121 in the second direction Y does not overlap with projections of the first electrical connection member 310 and the second electrical connection member 320 in the second direction Y, which can reduce an influence of the injection hole 121 on the electrical connection between the first electrical connection member 310 and the terminal post 140, and the electrical connection between the second electrical connection member 320 and the battery cell casing 100.

In some embodiments, the injection hole 121 and the terminal post 140 can be provided on the same side of the side wall 120, facilitating preparation of the battery cell casing 100.

In some other embodiments, the injection hole 121 and the terminal post 140 can be provided on different sides of the side wall 120.

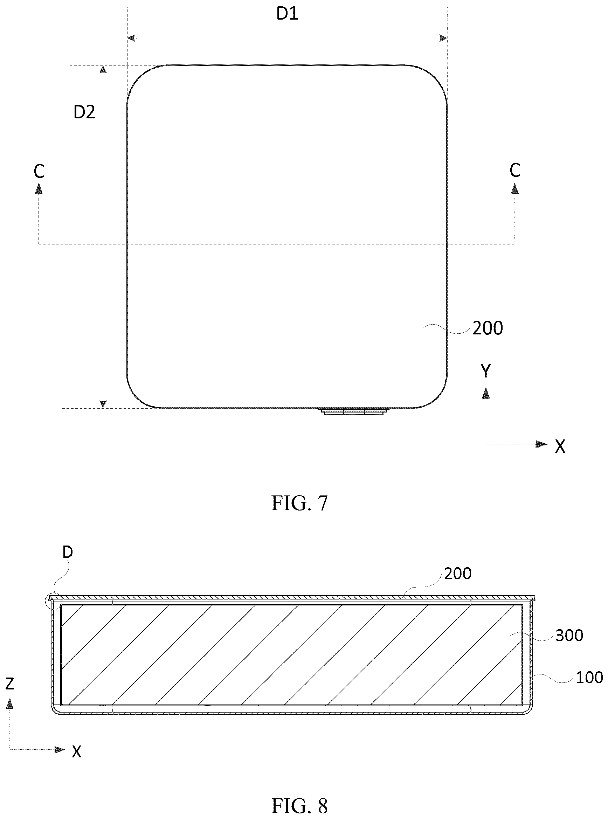

Referring to FIG. 2 and FIG. 7, FIG. 7 is a schematic structural diagram of an electrochemical apparatus according to some embodiments of the present application from one perspective. In some embodiments, a length of the battery cell casing cover 200 in a first direction X thereof is D1, a length of the battery cell casing cover 200 in a second direction Y thereof is D2, a length of the battery cell casing 100 in the first direction X is D3, and a length of the battery cell casing 100 in the second direction Y is D4, meeting D1 ≤ D3, D2 ≤ D4.

In some embodiments, the battery cell casing cover 200 may be a plate-like structure, so that the battery cell casing cover 200 can cover an opening side of the battery cell casing 100, and the battery cell casing 100 and the battery cell casing cover 200 together define the accommodating space 101.

By making a length D1 of the battery cell casing cover 200 in a first direction X thereof, a length D2 of the battery cell casing cover 200 in a second direction Y thereof, a length D3 of the battery cell casing 100 in the first direction X, and a length D4 of the battery cell casing 100 in the second direction Y meet D1 ≤ D3, D2 ≤ D4, a connection between the battery cell casing 100 and the battery cell casing cover 200 can be facilitated, making a connection between the battery cell casing 100 and the battery cell casing cover 200 relatively stable, and a possibility of the battery cell casing cover 200 protruding from the battery cell casing 100 can be reduced, which is beneficial to increasing an energy density of the electrochemical apparatus 10.

Due to limitations in precision and cost of preparing the battery cell casing 100 and the battery cell casing cover 200, in production, it may not be possible to make the dimension of the battery cell casing 100 completely match the dimension of the battery cell casing cover 200, that is, D1 = D3, D2 = D4. By making the dimension of the battery cell casing cover 200 slightly smaller than the dimension of the battery cell casing 100, while ensuring a stable connection between the battery cell casing cover 200 and the battery cell casing 100, a possibility of the battery cell casing cover 200 protruding from the battery cell casing 100 after assembly of the battery cell casing cover 200 and the battery cell casing 100 can be reduced, thereby reducing a possibility of increasing an overall dimension of the electrochemical apparatus 10 due to the assembly of the battery cell casing cover 200, which is beneficial to increasing an energy density of the electrochemical apparatus 10.

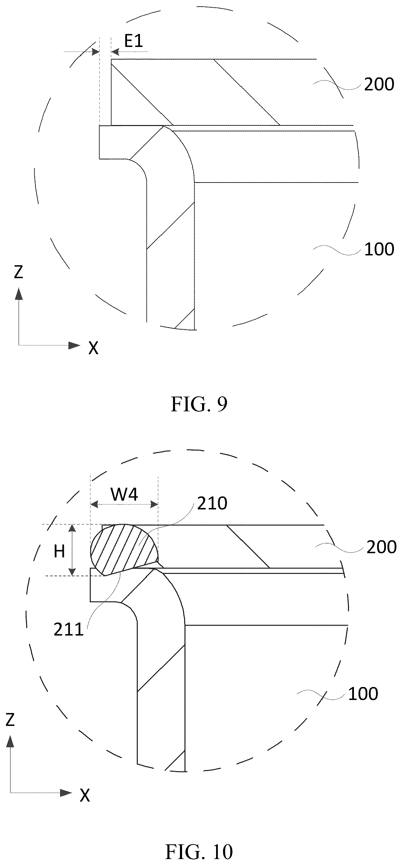

Referring also to FIG. 8 and FIG. 9, FIG. 8 is a schematic cross-sectional view of the electrochemical apparatus shown in FIG. 7 along direction C-C, and FIG. 9 is a schematic structural diagram of a partial enlargement at position D of the electrochemical apparatus shown in FIG. 8. In some embodiments, lengths by which two sides of the battery cell casing 100 in the first direction X exceed the battery cell casing cover 200 are E1 and E2 respectively, lengths by which two sides of the battery cell casing 100 in the second direction Y exceed the battery cell casing cover 200 are E3 and E4 respectively, and an average value of E1, E2, E3, and E4 is ‾E, meeting ‾E ≤ 0.05 mm, for example, ‾E may be 0.05 mm, 0.04 mm, or 0.03 mm.

In FIG. 9, a dimension E1 by which one side of the battery cell casing 100 in the first direction X exceeds the battery cell casing cover 200 is schematically marked, and other dimensions such as E2, E3, and E4 are similar to E1 and are not marked in the figure.

Lengths by which two sides of the battery cell casing 100 in the first direction X exceed the battery cell casing cover 200 are E1 and E2 respectively, and lengths by which two sides of the battery cell casing 100 in the second direction Y exceed the battery cell casing cover 200 are E3 and E4 respectively. By making an average value ‾E of E1, E2, E3, and E4 meet ‾E ≤ 0.05 mm, a length of a portion of the flange surface 131 not exceeding the battery cell casing cover 200 can be relatively large, that is, a length of a portion of the flange surface 131 connecting with the battery cell casing cover 200 is relatively large, thereby further facilitating a connection between the battery cell casing 100 and the battery cell casing cover 200, and making a connection between the battery cell casing 100 and the battery cell casing cover 200 more stable, sealing performance of the electrochemical apparatus 10 better, the electrochemical apparatus 10 less prone to generate a gap or separation between the battery cell casing 100 and the battery cell casing cover 200 due to force or environmental changes, and reliability of the electrochemical apparatus 10 higher. If E is relatively large (for example, greater than 0.05 mm), a length of a portion of the flange surface 131 not exceeding the battery cell casing cover 200 is relatively small, that is, a length of a portion of the flange surface 131 connecting with the battery cell casing cover 200 is relatively small, which may affect the connection strength between the battery cell casing 100 and the battery cell casing cover 200.

In some embodiments, two sides of the battery cell casing 100 in the first direction X and two sides in the second direction Y may all exceed the battery cell casing cover 200.

In some other embodiments, a side edge of the battery cell casing 100 may alternatively be aligned with the battery cell casing cover 200, or a side edge of the battery cell casing cover 200 may alternatively exceed the battery cell casing 100. For example, when one side of the battery cell casing cover 200 in the first direction X exceeds the battery cell casing 100, E1 is a negative number. However, by making ‾E ≤ 0.05 mm, the four side edges of the battery cell casing cover 200 do not excessively exceed the battery cell casing 100, thereby reducing an overall occupied space of the battery cell casing 100 and the battery cell casing cover 200, which is beneficial to increasing an energy density of the electrochemical apparatus 10.

For example, E1 ≤ 0.05 mm, E2 ≤ 0.05 mm, E3 ≤ 0.05 mm, and E4 ≤ 0.05 mm, which can make a length of a portion of the flange surface 131 connecting with the battery cell casing 100 relatively large, while ensuring a stable connection between the battery cell casing cover 200 and the battery cell casing 100, reducing a possibility of the battery cell casing cover 200 protruding from the battery cell casing 100 after assembly of the battery cell casing cover 200 and the battery cell casing 100, thereby reducing a possibility of increasing an overall dimension of the electrochemical apparatus 10 due to the assembly of the battery cell casing cover 200, which is beneficial to increasing an energy density of the electrochemical apparatus 10.

In some other embodiments, the battery cell casing cover 200 may alternatively be a hollow structure with one side open, an opening side of the battery cell casing cover 200 covering an opening side of the battery cell casing 100, together forming the accommodating space 101. The battery cell casing cover 200 can further be provided with a flange portion (not shown in the figures), a structure of the flange portion of the battery cell casing cover 200 being similar to that of the flange portion 130 of the battery cell casing 100, which will not be repeated herein, and the flange portion of the battery cell casing cover 200 can cooperate with the flange portion 130 of the battery cell casing 100 to achieve connection.

In some embodiments, the battery cell casing 100 and the battery cell casing cover 200 may be connected through welding.

By making the battery cell casing 100 and the battery cell casing cover 200connected through welding, a connection between the battery cell casing 100 and the battery cell casing cover 200 can be stable, sealing performance of the electrochemical apparatus 10 is relatively good, the electrochemical apparatus 10 is less prone to generate a gap or separation between the battery cell casing 100 and the battery cell casing cover 200 due to force or environmental changes, and reliability of the electrochemical apparatus 10 is relatively high.

In some other embodiments, the battery cell casing 100 and the battery cell casing cover 200 may alternatively be connected through bonding.

Referring to FIG. 10, FIG. 10 is a schematic structural diagram of a partial enlargement at position D of the electrochemical apparatus shown in FIG. 8 in another state. In some embodiments, the battery cell casing 100 and the battery cell casing cover 200 are connected by welding, a welding portion 210 is formed between the battery cell casing 100 and the battery cell casing cover 200, a depth of the welding portion 210 in a thickness direction of the bottom wall 110 is H, and a width of the welding portion 210 in a thickness direction of the side wall 120 is W4, meeting H ≥ 0.5 × T1, W4 ≥ T1, for example, H may be 0.5 × T1, 0.8 × T1, or T1, and W4 may be T1, 1.2 × T1, or 1.4 × T1.

In some embodiments, a welding method of the battery cell casing 100 and the battery cell casing cover 200 may be laser welding, that is, making the laser pass through the battery cell casing cover 200 to reach the battery cell casing 100, melting a connection place between the battery cell casing 100 and the battery cell casing cover 200 to form the welding portion 210.

In some embodiments, a depth of the welding portion 210 is a dimension of the welding portion 210 in the third direction Z, and a width of the welding portion 210 is a dimension of the welding portion 210 in a direction perpendicular to the third direction Z (including the first direction X and the second direction Y). For example, as shown in FIG. 2 and FIG. 4, a width of two portions of the welding portion 210 opposite in the first direction X is a dimension of the welding portion 210 in the first direction X, and a width of two portions of the welding portion 210 opposite in the second direction Y is a dimension of the welding portion 210 in the second direction Y.

In the rotary cutting housing plus top welding method, the welding portion formed between the battery cell casing 100 and the battery cell casing cover 200 is formed in a direction opposite to the third direction Z, and a width of the welding portion in the direction opposite to the third direction Z gradually decreases, and the welding width of the welding portion is a width of a cross-section of the welding portion on a plane where a top surface of the battery cell casing 100 (an end surface of the side wall 120 or the flange portion away from the bottom wall 110) is located, which can reach 1/4 of a wall thickness T1 of the side wall of the battery cell casing 100, so the welding width is relatively small, leading to relatively low welding strength between the battery cell casing 100 and the battery cell casing cover 200, and the electrochemical apparatus 10 may generate a gap or separation between the battery cell casing 100 and the battery cell casing cover 200 due to force or environmental changes, affecting the reliability of the electrochemical apparatus 10.

In the large flange plus top welding method, the welding portion formed between the battery cell casing 100 and the battery cell casing cover 200 is formed in a direction opposite to the third direction Z, and a width of the welding portion in the direction opposite to the third direction Z gradually decreases, and the welding width of the welding portion is a width of a cross-section of the welding portion on a plane where a top surface of the battery cell casing 100 (an end surface of the side wall 120 or the flange portion away from the bottom wall 110) is located, which can reach 1/2 of a wall thickness T1 of the side wall of the battery cell casing 100, the welding width is relatively small, leading to relatively low welding strength between the battery cell casing 100 and the battery cell casing cover 200, and the electrochemical apparatus 10 may generate a gap or separation between the battery cell casing 100 and the battery cell casing cover 200 due to force or environmental changes, affecting the reliability of the electrochemical apparatus 10.

In some embodiments of the present application, by making a depth H of the welding portion 210 in a thickness direction of the bottom wall 110 and a width W4 of the welding portion 210 in a thickness direction of the side wall 120 meet H ≥ 0.5 × T1, W4 ≥ T1, welding strength between the battery cell casing 100 and the battery cell casing cover 200 can be relatively high, a connection between the battery cell casing 100 and the battery cell casing cover 200 is stable, sealing performance of the electrochemical apparatus 10 is relatively good, the electrochemical apparatus 10 is less prone to generate a gap or separation between the battery cell casing 100 and the battery cell casing cover 200 due to force or environmental changes, and reliability of the electrochemical apparatus 10 is relatively high. If H and W4 are relatively small (for example, H < 0.5 × T1, W4 < T1), welding strength between the battery cell casing 100 and the battery cell casing cover 200 is relatively low, the electrochemical apparatus 10 may generate a gap or separation between the battery cell casing 100 and the battery cell casing cover 200 due to force or environmental changes, affecting the reliability of the electrochemical apparatus 10.

In some embodiments, a portion of the welding portion 210 protrudes from a side edge of the battery cell casing cover 200, and an outer surface of the protruding portion is an arc surface.

In current welding methods, the welding portion 210 is formed between the battery cell casing 100 and the battery cell casing cover 200 and located inside the battery cell casing 100 and the battery cell casing cover 200, that is, spaced from side edges of the battery cell casing 100 and the battery cell casing cover 200, a volume of the welding portion 210 is relatively small, making the connection strength between the battery cell casing 100 and the battery cell casing cover 200 relatively low.

In some embodiments of the present application, a portion of the welding portion 210 protruding from a side edge of the battery cell casing cover 200 can make a volume of the welding portion 210 relatively large, connection strength between the battery cell casing 100 and the battery cell casing cover 200 relatively high, a connection between the battery cell casing 100 and the battery cell casing cover 200 stable, sealing performance of the electrochemical apparatus 10 relatively good, the electrochemical apparatus 10 less prone to generate a gap or separation between the battery cell casing 100 and the battery cell casing cover 200 due to force or environmental changes, and reliability of the electrochemical apparatus 10 relatively high.

In some embodiments, a portion of the welding portion 210 may alternatively protrude from side edges of both the battery cell casing 100 and the battery cell casing cover 200.

If an outer surface of the portion of the welding portion 210 protruding from the battery cell casing cover 200 has edges and corners, when the welding portion 210 interferes with other apparatuses, the welding portion 210 is prone to stress concentration and damage, and is prone to damage the other apparatuses. In some embodiments of the present application, making an outer surface of the portion of the welding portion 210 protruding from the battery cell casing cover 200 an arc surface can reduce a possibility of damage to the welding portion 210 and other apparatuses when the welding portion 210 interferes with the other apparatuses.

**Table 1 Energy density improvement and welding strength improvement of electrochemical apparatus**

| | T1 | W1 | W2 | W3 | T2 | T3 | Q1 | Q2 | Q3 |
|---|---|---|---|---|---|---|---|---|---|
| Comparative Example 1 | 0.2 | 0 | 0.2 | 0.075 | 0.075 | 0.075 | / | / | / |
| Comparative Example 2 | 0.15 | 0.2 | 0.2 | 0.3 | 0.15 | 0.075 | 0.05% | 25.87% | 35.60 |
| Example 1 | 0.15 | 0.12 | 0.23 | 0.2 | 0.12 | 0.075 | 0.62% | 102.80% | 57.36 |
| Example 2 | 0.15 | 0.12 | 0.13 | 0.1 | 0.12 | 0.075 | 1.20% | 99.30% | 56.37 |
| Example 3 | 0.15 | 0.12 | 0.08 | 0.05 | 0.12 | 0.075 | 1.49% | 99.30% | 56.37 |
| Example 4 | 0.1 | 0.07 | 0.18 | 0.15 | 0.07 | 0.075 | 2.26% | 81.82% | 51.42 |
| Example 5 | 0.1 | 0.07 | 0.13 | 0.1 | 0.07 | 0.075 | 2.56% | 78.32% | 50.43 |
| Example 6 | 0.1 | 0.07 | 0.105 | 0.075 | 0.055 | 0.075 | 2.70% | 80.07% | 50.93 |
| Example 7 | 0.1 | 0.03 | 0.12 | 0.05 | 0.04 | 0.075 | 2.85% | 76.57% | 49.94 |
| Example 8 | 0.075 | 0.07 | 0.155 | 0.15 | 0.055 | 0.075 | 2.94% | 39.86% | 39.56 |
| Example 9 | 0.075 | 0.07 | 0.08 | 0.075 | 0.055 | 0.075 | 3.38% | 39.86% | 39.56 |
| Example 10 | 0.075 | 0.07 | 0.055 | 0.05 | 0.055 | 0.075 | 3.53% | 39.86% | 39.56 |
| Example 11 | 0.05 | 0.03 | 0.17 | 0.15 | 0.04 | 0.075 | 3.62% | 39.86% | 39.56 |
| Example 12 | 0.05 | 0.03 | 0.12 | 0.1 | 0.04 | 0.075 | 3.91% | 39.86% | 39.56 |
| Example 13 | 0.05 | 0.03 | 0.07 | 0.05 | 0.04 | 0.075 | 4.21% | 25.87% | 35.60 |

Referring to Table 1, T1 in Table 1 is a wall thickness of a side wall of the battery cell casing, W1 is a width of a transition surface of the battery cell casing, W2 is a width of a flange surface of the battery cell casing, W3 is a width of a portion of a flange portion of the battery cell casing protruding from an outer surface of the side wall, T2 is a thickness of a portion of the flange portion of the battery cell casing protruding from the outer surface of the side wall, T3 is a thickness of the battery cell casing cover, Q1 is an energy density improvement rate of Comparative Example 2 and Examples 1 to 13 compared to Comparative Example 1, Q2 is welding strength improvement rate of Comparative Example 2 and Examples 1 to 13 compared to Comparative Example 1, and Q3 is welding strength improvement value of Comparative Example 2 and Examples 1 to 13 compared to Comparative Example 1. Units of thicknesses and widths of various portions are all mm, and a unit of welding strength value is N/mm. In Comparative Example 1, the battery cell casing is not provided with a flange portion, and the battery cell casing cover is directly connected with a top surface of the side wall of the battery cell casing, and in Comparative Example 2, the battery cell casing is provided with a flange portion, but the flange portion is not processed.

A measurement method of welding strength between the battery cell casing and the battery cell casing cover is: cutting the welded battery cell casing and battery cell casing cover in a direction perpendicular to a weld seam to a predetermined width S, folding the sample into a T-shape, and using a Gotech tensile testing machine to pull open metal parts at both ends of the weld seam, so that a maximum tensile force measured is F, and the welding strength is: F/S.

Based on Table 1, the following conclusions can be obtained:
1. Referring to Comparative Example 1 and Comparative Example 2, by providing a flange portion in the battery cell casing, a wall thickness T1 of the battery cell casing can be reduced, and an energy density of the electrochemical apparatus can be increased, and welding strength between the battery cell casing and the battery cell casing cover can be improved.
2. Referring to Comparative Example 2, Example 1, Example 4, and Example 11, as a width W1 of a transition surface of the battery cell casing decreases, a wall thickness T1 of the battery cell casing decreases, thereby increasing an energy density of the electrochemical apparatus.
3. Referring to Examples 1 to 3, Examples 4 to 6, and Examples 11 to 13 respectively, as a width W2 of a flange surface of the battery cell casing decreases, a width W3 of a portion of the flange portion of the battery cell casing protruding from the outer surface of the side wall also decreases, which can increase the energy density of the electrochemical apparatus, but decrease welding strength between the battery cell casing and the battery cell casing cover.
4. Referring to Examples 1 to 3 and Examples 8 to 10, when a width W2 of a flange surface of the battery cell casing decreases, but a thickness T2 of a portion of the flange portion of the battery cell casing protruding from the outer surface of the side wall remains unchanged, the energy density of the electrochemical apparatus can be increased, but an influence on welding strength between the battery cell casing and the battery cell casing cover is relatively small.
5. Referring to Example 7 and Example 12, when a width W1 of a transition surface of the battery cell casing remains unchanged, and a width W2 of a flange surface of the battery cell casing and a width W3 of a portion of the flange portion of the battery cell casing protruding from the outer surface of the side wall increase, a wall thickness T1 of the battery cell casing can be reduced, thereby increasing the energy density of the electrochemical apparatus.
6. Referring to Example 6 and Example 8, when a width W1 of a transition surface of the battery cell casing remains unchanged, and a thickness T2 of a portion of the flange portion of the battery cell casing protruding from the outer surface of the side wall remains unchanged, a width W2 of a flange surface of the battery cell casing increases, but a wall thickness T1 of the battery cell casing decreases, which will have a relatively large influence on welding strength between the battery cell casing and the battery cell casing cover.

**Table 2 Welding strength test of electrochemical apparatus**

| | Comparative Example 1 | Comparative Example 2 | Example 4 |
|---|---|---|---|
| T1 | 0.15 mm | 0.1 mm | 0.1 mm |
| T3 | 0.075 mm | 0.075 mm | 0.075 mm |
| W3 | 0.075 mm | 0.3 mm | 0.075 mm |
| Welding strength 1 | 25 N/mm | 35 N/mm | 49 N/mm |
| Welding strength 2 | 28 N/mm | 38 N/mm | 54 N/mm |
| Welding strength 3 | 25 N/mm | 36 N/mm | 45 N/mm |
| Welding strength 4 | 34 N/mm | 40 N/mm | 46 N/mm |
| Welding strength 5 | 30 N/mm | 33 N/mm | 54 N/mm |
| Welding strength 6 | 27 N/mm | 37 N/mm | 51 N/mm |
| Welding strength 7 | 31 N/mm | 34 N/mm | 52 N/mm |
| Welding strength 8 | 29 N/mm | 32 N/mm | 57 N/mm |
| Average welding strength | 28.625 N/mm | 35.625 N/mm | 51 N/mm |

Referring to Table 2, T1 in Table 2 is a wall thickness of a side wall of the battery cell casing (in the tested comparative examples and examples, a wall thickness of a bottom wall of the battery cell casing is equal to the wall thickness of the side wall), T3 is a thickness of the battery cell casing cover, and W3 is a width of a portion of a flange portion of the battery cell casing protruding from an outer surface of the side wall. In Comparative Example 1, the battery cell casing is not provided with a flange portion, and the battery cell casing cover is directly connected with a top surface of the side wall of the battery cell casing, and in Comparative Example 2, the battery cell casing is provided with a flange portion, but the flange portion is not processed. Example 4 is the electrochemical apparatus of Example 4 in Table 1.

Based on Table 2, it can be seen that compared to Comparative Example 1, in Example 4, a width W3 of a portion of a flange portion of the battery cell casing protruding from an outer surface of the side wall is equal, a wall thickness T1 of a side wall of the battery cell casing is smaller, welding strength of the electrochemical apparatus is greatly improved, specifically, the welding strength is improved by an average of 43.87%, and combined with Table 1, the energy density of the electrochemical apparatus is also increased by 2.26%. Compared to Comparative Example 2, in Example 4, a wall thickness T1 of a side wall of the battery cell casing is equal, a width W3 of a portion of a flange portion of the battery cell casing protruding from an outer surface of the side wall is smaller, welding strength of the electrochemical apparatus is greatly improved, specifically, the welding strength is improved by an average of 30.15%, and combined with Table 1, the energy density of the electrochemical apparatus is also increased by 2.2%.

It can be known that the examples provided by the present application can increase a volume of the accommodating space, increase the energy density of the electrochemical apparatus, and also provide relatively high welding strength between the battery cell casing and the battery cell casing cover.

An embodiment of the present application provides an electric apparatus, including the electrochemical apparatus 10 of any one of the above solutions, where the electrochemical apparatus 10 is configured to provide electric energy for the electric apparatus.

The electric apparatus can be any device or system using the electrochemical apparatus 10 as described above.

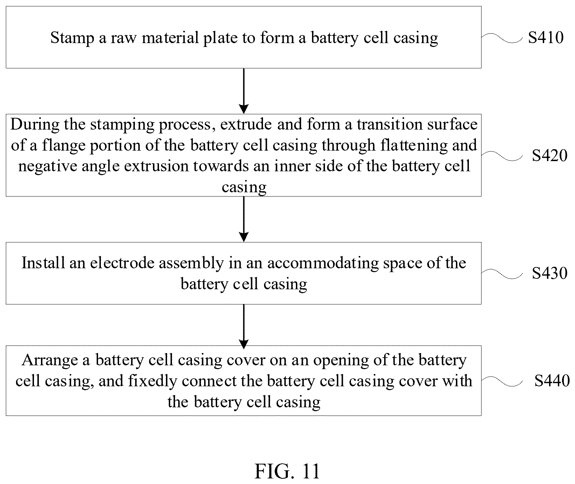

Referring to FIG. 11, FIG. 11 is a schematic flowchart of a preparation method of an electrochemical apparatus according to some embodiments of the present application. The preparation method of the electrochemical apparatus includes the following steps:
S410. Stamp a raw material plate to form a battery cell casing.

In some embodiments, the raw material plate may be a steel plate, or may be other metal plates.

S420. During the stamping process, extrude and form a transition surface of a flange portion of the battery cell casing through flattening and negative angle extrusion towards an inner side of the battery cell casing, so that a width W1 of the transition surface in a thickness direction of a side wall of the battery cell casing and a wall thickness T1 of the side wall of the battery cell casing meet 0 < W1 ≤ T1.

In some other embodiments, the transition surface of the flange portion of the battery cell casing can also be formed by extruding towards the inner side of the battery cell casing only by flattening, or the transition surface of the flange portion of the battery cell casing can also be formed by extruding towards the inner side of the battery cell casing only by negative angle extrusion.

In some other embodiments, after stamping, the flange portion of the battery cell casing can also be processed, so that a width W1 of the transition surface in a thickness direction of a side wall of the battery cell casing and a wall thickness T1 of the side wall of the battery cell casing meet 0 < W1 ≤ T1.

S430. Install an electrode assembly in an accommodating space of the battery cell casing.

In some embodiments, after placing the electrode assembly in the accommodating space, a first electrical connection member of the electrode assembly is connected with a terminal post of the battery cell casing, and a second electrical connection member of the electrode assembly is connected with the battery cell casing, to achieve installation of the electrode assembly.

S440. Arrange a battery cell casing cover on an opening of the battery cell casing, and fixedly connect the battery cell casing cover with the battery cell casing.

In some embodiments, after fixedly connecting the battery cell casing cover with the battery cell casing, electrolyte also needs to be injected into the accommodating space of the battery cell casing through an injection hole of the battery cell casing, and the injection hole is blocked, after the electrolyte wets the electrode assembly, the electrochemical apparatus can operate normally.

During the stamping process, by flattening and negative angle extrusion, a width W1 of the transition surface of the battery cell casing in a thickness direction of the side wall of the battery cell casing and a wall thickness T1 of the side wall of the battery cell casing meet 0 < W1 ≤ T1, making a width of a flange surface of the battery cell casing relatively large, while a width of a portion of the flange portion of the battery cell casing protruding from the side wall is relatively small, thereby increasing a volume of the accommodating space and increasing an energy density of the electrochemical apparatus, and enabling the wall thickness of the side wall to be smaller, thereby further increasing the volume of the accommodating space and increasing the energy density of the electrochemical apparatus. If W1 is relatively large (for example, greater than T1), it may cause the width of the flange surface to be relatively small or the width of the portion of the flange portion protruding from the side wall to be relatively large. However, a relatively small width of the flange surface may affect the connection strength between the battery cell casing and the battery cell casing cover, and a relatively large width of the portion of the flange portion protruding from the side wall may compress the accommodating space, affecting the energy density of the electrochemical apparatus.

In some embodiments, the method of fixedly connecting the battery cell casing cover with the battery cell casing includes: welding and connecting the battery cell casing cover with the battery cell casing through swing welding.

Swing welding makes the laser swing back and forth to form a welding portion extending along a curve between the battery cell casing and the battery cell casing cover, which can increase an area of the welding portion.

Line welding makes the laser move along a straight line to form a welding portion extending along a straight line between the battery cell casing and the battery cell casing cover.

Since swing welding needs to reserve a certain welding width, in structures where a welding width reserved between the current battery cell casing cover and the battery cell casing is narrow, it is not easy to use swing welding for welding, and generally line welding or the like is used. In some embodiments of the present application, a width W1 of the transition surface of the battery cell casing in a thickness direction of the side wall of the battery cell casing and a wall thickness T1 of the side wall of the battery cell casing meet 0 < W1 ≤ T1, which can make a width of the flange surface of the battery cell casing larger, facilitating the use of swing welding.

By welding and connecting the battery cell casing cover with the battery cell casing through swing welding, compared to line welding or the like, an area of the welding portion can be increased, thereby further improving welding strength between the battery cell casing and the battery cell casing cover, making a connection between the battery cell casing and the battery cell casing cover stable, sealing performance of the electrochemical apparatus relatively good, the electrochemical apparatus less prone to generate a gap or separation between the battery cell casing and the battery cell casing cover due to force or environmental changes, and reliability of the electrochemical apparatus relatively high.

In some other embodiments, the battery cell casing cover may alternatively be connected through welding and connected to the battery cell casing through line welding or the like.

It should be noted that, in the case of no conflict, some embodiments in the present application and features in these embodiments can be combined with each other.

The above are only preferred embodiments of the present application and are not used to limit the present application. For those skilled in the art, the present application can have various changes and modifications. Any modifications, equivalent replacements, improvements, or the like, made within the spirit and principles of the present application should be included within the protection scope of the present application.

## Claims

1. A battery cell casing, comprising a bottom wall, a side wall, and a flange portion, wherein the side wall is provided around the bottom wall, the side wall and the bottom wall together enclose an accommodating space having an opening, the flange portion is provided at an end of the side wall away from the bottom wall, and at least a portion of the flange portion protrudes from an inner surface and/or an outer surface of the side wall; and
the flange portion has a flange surface and a transition surface, wherein the flange surface is substantially perpendicular to the side wall and configured to connect to a battery cell casing cover, the transition surface curvedly connects the flange surface and the inner surface and/or the outer surface of the side wall, a width of the transition surface in a thickness direction of the side wall is W1, and a wall thickness of the side wall is T1, meeting 0 < W1 ≤ T1.

2. The battery cell casing according to claim 1, wherein 0 < W1 ≤ 0.7 × T1.

3. The battery cell casing according to claim 1, wherein a width of the flange surface in the thickness direction of the side wall is W2, meeting W2 ≥ 0.7 × T1.

4. The battery cell casing according to claim 1, wherein the flange surface is a plane, and the transition surface is an arc surface.

5. The battery cell casing according to claim 1, wherein at least a portion of the flange portion protrudes from the outer surface of the side wall, and a width of a portion of the flange portion protruding from the outer surface of the side wall in the thickness direction of the side wall is W3, meeting 0.05 mm ≤ W3 ≤ 0.3 mm.

6. The battery cell casing according to claim 5, wherein 0.05 mm ≤ W3 ≤ 0.15 mm.

7. The battery cell casing according to claim 1, wherein at least a portion of the flange portion protrudes from the outer surface of the side wall, and a thickness of a portion of the flange portion protruding from the outer surface of the side wall is T2, meeting 0.7 × T1 ≤ T2 ≤ 1.1 × T1.

8. The battery cell casing according to claim 1, wherein 0.05 mm ≤ T1 ≤ 0.15 mm.

9. The battery cell casing according to claim 8, wherein 0.05 mm ≤ T1 ≤ 0.1 mm.

10. The battery cell casing according to claim 1, wherein a thickness of a portion of the flange portion corresponding to the transition surface is T3, meeting T3 > T1.

11. The battery cell casing according to claim 10, wherein the T3 meets: T1 < T3 < 1.5 × T1.

12. The battery cell casing according to claim 1, wherein a thickness of a portion of the flange portion corresponding to the transition surface is T3, meeting 0.06 mm ≤ T3 ≤ 0.2 mm.

13. The battery cell casing according to claim 12, wherein the T3 meets: 0.09 mm ≤ T3 ≤ 0.12 mm.

14. An electrochemical apparatus, comprising the battery cell casing according to any one of claims 1 to 13, a battery cell casing cover, and an electrode assembly, wherein the electrode assembly is accommodated in the accommodating space, and the battery cell casing cover is arranged on the opening.

15. The electrochemical apparatus according to claim 14, wherein a length of the battery cell casing cover in a first direction is D1, a length of the battery cell casing cover in a second direction is D2, a length of the battery cell casing in the first direction is D3, and a length of the battery cell casing in the second direction is D4, meeting D1 ≤ D3, D2 ≤ D4; and the first direction, the second direction, and a thickness direction of the battery cell casing cover are perpendicular to each other.

16. The electrochemical apparatus according to claim 14, wherein lengths by which two sides of the battery cell casing in the first direction exceed the battery cell casing cover are E1 and E2 respectively, lengths by which two sides of the battery cell casing in the second direction exceed the battery cell casing cover are E3 and E4 respectively, and an average value of E1, E2, E3, and E4 is ‾E, meeting ‾E ≤ 0.05 mm.

17. The electrochemical apparatus according to claim 14, wherein the battery cell casing and the battery cell casing cover are connected by welding or bonding.

18. The electrochemical apparatus according to claim 14, wherein the battery cell casing and the battery cell casing cover are connected by welding, a welding portion is formed between the battery cell casing and the battery cell casing cover, a depth of the welding portion in a thickness direction of the bottom wall is H, and a width of the welding portion in the thickness direction of the side wall is W4, meeting H ≥ 0.5 × T1, W4 ≥ T1.

19. The electrochemical apparatus according to claim 14, wherein the battery cell casing and the battery cell casing cover are connected by welding, a welding portion is formed between the battery cell casing and the battery cell casing cover, a portion of the welding portion protrudes from a side edge of the battery cell casing cover, and an outer surface of the protruding portion is an arc surface.

20. An electric apparatus, comprising the electrochemical apparatus according to any one of claims 14 to 19, wherein the electrochemical apparatus is configured to provide electric energy.

21. A preparation method of an electrochemical apparatus, comprising:
stamping a raw material plate to form a battery cell casing;
during the stamping process, extruding and forming a transition surface of a flange portion of the battery cell casing through flattening and negative angle extrusion towards an inner side of the battery cell casing, so that a width W1 of the transition surface in a thickness direction of a side wall of the battery cell casing and a wall thickness T1 of the side wall of the battery cell casing meet 0 < W1 ≤ T1;
installing an electrode assembly in an accommodating space of the battery cell casing; and
arranging a battery cell casing cover on an opening of the battery cell casing, and fixedly connecting the battery cell casing cover with the battery cell casing.

22. The method according to claim 21, wherein the method of fixedly connecting the battery cell casing cover with the battery cell casing comprises:
welding and connecting the battery cell casing cover with the battery cell casing through swing welding.
